(19) Europäisches Patentamt
European Patent Office
Office européen des brevets

(11) **EP 3 800 774 A1**

(12) **EUROPEAN PATENT APPLICATION**

(43) Date of publication:
07.04.2021 Bulletin 2021/14

(51) Int Cl.:
$H02M\ 5/458$ (2006.01)     $H02M\ 7/23$ (2006.01)
$H02M\ 7/493$ (2007.01)     $H02M\ 7/5387$ (2007.01)
$H02M\ 7/48$ (2007.01)

(21) Application number: 20197198.3

(22) Date of filing: 21.09.2020

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 01.10.2019 JP 2019181525

(71) Applicants:
• **KABUSHIKI KAISHA TOSHIBA**
**Minato-ku**
**Tokyo**
**105-0023 (JP)**

• **Toshiba Energy Systems & Solutions
Corporation
Saiwai-ku
Kawasaki-shi
Kanagawa 2120013 (JP)**

(72) Inventors:
• **KOYAMA, Yushi**
**Kanagawa, 212-0013 (JP)**
• **KAGEYAMA, Takahisa**
**Kanagawa, 212-0013 (JP)**
• **MORI, Junji**
**Kanagawa, 212-0013 (JP)**

(74) Representative: **AWA Sweden AB**
**Junkersgatan 1**
**582 35 Linköping (SE)**

(54) **ELECTRIC POWER CONVERSION APPARATUS AND METHOD FOR CONTROLLING
ELECTRIC POWER CONVERSION APPARATUS**

(57) According to one embodiment, there is provided an electric power conversion apparatus provided with a plurality of converters and inverters (11, 21, 12, 22; 11, 21, 12, 22, 13, 23) that share direct current voltage sections, each of the direct current voltage sections independent of other direct current voltage sections, and output sides of the inverters (21, 22; 21, 22, 23) connected to each other. The apparatus includes a control device (10) configured to obtain a cross current amount between the inverters by performing predetermined axis-conversion on a detection value of a cross current between the inverters, and control an output voltage or an output current of the individual converters or the individual inverters based on the cross current amount.

F I G. 1

EP 3 800 774 A1

**Description**

Embodiments described herein relate generally to an electric power conversion apparatus and a method for controlling the electric power conversion apparatus.

Electric power converters for converting a direct current (DC) into an alternating current (AC) and vice versa are also called inverters or converters, and have been used in a wide range of fields in society. Generally, a device for converting DC into AC is called an inverter, and that for converting AC into DC is called a converter. The electric power converter converts the form of electric power by a semiconductor switching device performing ON/OFF switching to switch an energizing state of the electricity.

When increasing the output of the electric power converter, basically the power converter itself should be connected in parallel. In a general parallel configuration of power converters each including a converter and an inverter, a plurality of converters respectively convert an AC power source into independent DCs, and a plurality of inverters convert the individual DCs into ACs to supply a load current to a load.

However, there are slight differences in output voltages due to individual differences in components of the power converter. Thus, an electric current called a cross current flows between the power converters in accordance with the voltage difference. For example, if there is a difference in timing or amplitude of output voltages of a plurality of inverters, a cross current flows between the inverters. Since the cross current is superimposed on an output current of a power converter, a current rating of a component such as a semiconductor device has to be increased, which results in increase in size and cost of the apparatus. The cross current can be suppressed by inserting a reactor (cross current reactor) into the outputs of the power converters. However, if the voltage difference is large, a large cross current reactor is required, which may also result in the volume increase and cost increase of the apparatus.

In order to solve this problem, a technique of detecting a cross current to adjust a power converter output has been proposed. However, a detection value of the cross current in this case is an instantaneous value and thus is not suitable for fine adjustment with feedback control, and there is a drawback that a cross current due to a difference in output voltage amplitude cannot be suppressed.

In addition, there is a technique of adjusting a pulse timing in individual gate substrates or adjusting a detection gain individually so as not to generate a difference in output voltage, but such individual adjustment cannot deal with changes in characteristics over time.

Under these circumstances, there is a demand for providing an electric power conversion apparatus capable of suppressing a cross current between power converters, while suppressing increase in size and cost of the apparatus, and a method for controlling the electric power conversion apparatus.

In general, according to one embodiment, there is provided an electric power conversion apparatus provided with a plurality of converters and inverters that share direct current voltage sections, each of the direct current voltage sections independent of other direct current voltage sections, and output sides of the inverters connected to each other. The apparatus includes a control device configured to obtain a cross current amount between the inverters by performing predetermined axis-conversion on a detection value of a cross current between the inverters, and control an output voltage or an output current of the individual converters or the individual inverters based on the cross current amount.

The invention can be more fully understood from the following detailed description when taken in conjunction with the accompanying drawings, in which:

FIG. 1 is a diagram showing an example of a configuration of an electric power conversion apparatus according to a first embodiment;
FIGS. 2A and 2B are diagrams showing examples of a waveform of a load current to be supplied to a load and a waveform of a cross current;
FIG. 3 is a diagram showing a configuration example of a cross current controller in FIG. 1;
FIG. 4 is a diagram showing another configuration example of the cross current controller in FIG. 1;
FIG. 5 is a diagram showing a relationship between an $r\theta$ system and an $\alpha\beta$ system;
FIG. 6 is a diagram showing a relationship between a three-phase system of a cross current and the $\alpha\beta$ system;
FIG. 7 is a diagram showing an example of a calculation equation for obtaining a d-axis current and a q-axis current from a three-phase cross current;
FIG. 8 is a diagram showing an example of a calculation equation for obtaining an $\alpha$ electric current and a $\beta$ electric current from a three-phase cross current;
FIG. 9 is a diagram showing an example of a configuration in a case of providing a delay processor in a pulse adjustment section;
FIG. 10 is a diagram showing an example of a gate signal before and after a pulse is delayed;
FIG. 11 is a diagram showing an example of a configuration in a case of providing a carrier generation section and a comparator in the pulse adjustment section;
FIG. 12 is a diagram showing a state in which a delay is not generated in a pulse of a gate signal;
FIG. 13 is a diagram showing a state in which a delay is generated in a pulse of a gate signal;
FIG. 14 is a diagram showing an example of a configuration of an electric power conversion apparatus according to a second embodiment; and
FIG. 15 is a diagram showing a configuration example of a cross current controller in FIG. 14.

Hereinafter, embodiments will be described with reference to the drawings.

[First Embodiment]

First, a first embodiment will be explained.

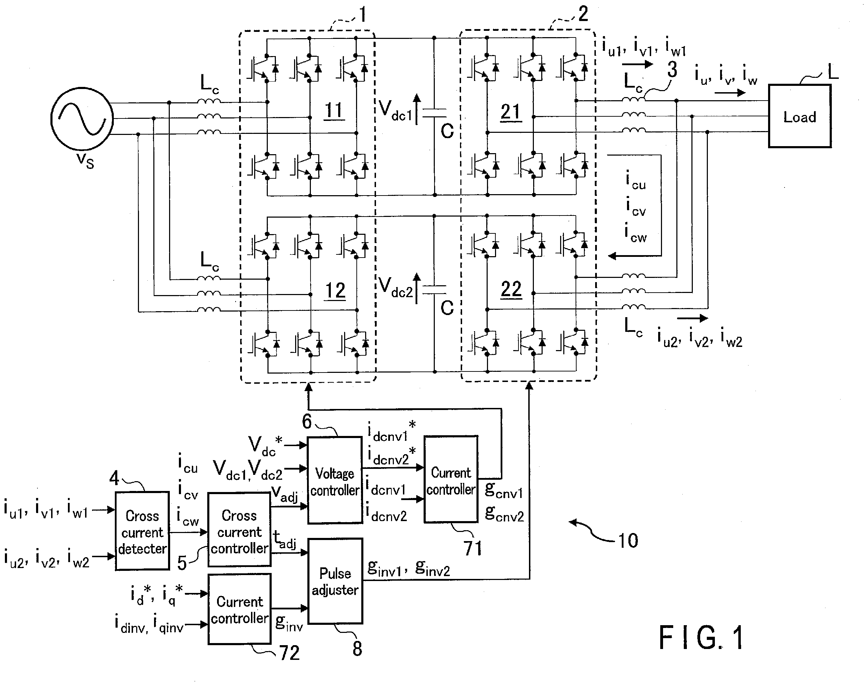

FIG. 1 is a diagram showing an example of a configuration of an electric power conversion apparatus according to the first embodiment.

In the electric power conversion apparatus according to the present embodiment, a plurality of power converters each including a converter and an inverter that share a DC voltage section including a capacitor C are connected in parallel. Each DC voltage section is independent from the other DC voltage sections, and output sides of the inverters are connected to each other.

FIG. 1 exemplifies a case in which two power converters each including a converter and an inverter are connected in parallel.

Specifically, a power converter including a converter 11 and an inverter 21 and a power converter including a converter 12 and an inverter 22 are connected in parallel. The converters 11 and 12 constitute a converter section 1, and the inverters 21 and 22 constitute an inverter section 2. A DC voltage section shared by the converter 11 and inverter 21 and a DC voltage section shared by the converter 12 and inverter 22 are independent from each other, and are not connected to each other.

Input sides of the converters 11 and 12 are respectively connected to an AC power source $v_s$ via reactors $L_c$. On the other hand, output sides of the inverters 21 and 22 are respectively connected to a load L via cross current reactors (reactors $L_c$) 3. Each of the converters 11 and 12 includes a bridge circuit formed of arms for respective phases, each of the arms having semiconductor switching devices on both sides. The converters 21 and 22 also have the same configuration.

Other than that, the electric power conversion apparatus according to the present embodiment includes a control device 10 that individually controls the output voltage or output current of the converters 11 and 12 and the inverters 21 and 22.

When each semiconductor switching device of the converters 11 and 12 is driven by a gate signal supplied from the control device 10, the converters 11 and 12 convert the electric power supplied from the AC power source $v_s$ via the reactors $L_c$ from AC to DC.

The electric power converted by converters 11 and 12 into DC is supplied to the corresponding DC voltage section including the capacitor C.

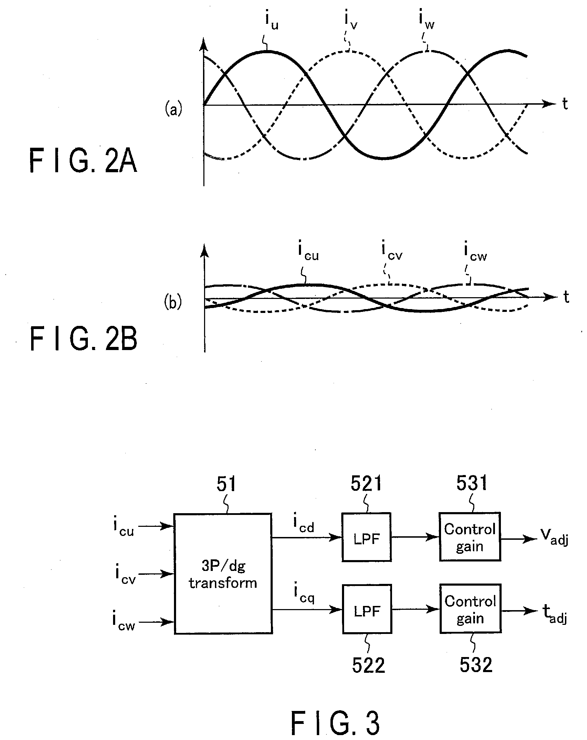

When each semiconductor switching device of the inverters 21 and 22 is driven by a gate signal supplied from the control device 10, the inverters 21 and 22 convert the electric power of the DC voltage section from DC to AC. At this time, load electric currents $i_u$, $i_v$, and $i_w$ obtained by combining electric currents $i_{u1}$, $i_{v1}$, and $i_{w1}$ output in respective phases from the inverter 21 and electric currents $i_{u2}$, $i_{v2}$, and $i_{w2}$ output in respective phases from the inverter 22, respectively, are supplied to the load L. An example of the load currents $i_u$, $i_v$, and $i_w$ supplied to the load L is shown in FIG. 2A.

Hereinafter, a technique of suppressing cross currents $i_{cu}$, $i_{cv}$, and $i_{cw}$ generated between the inverters 21 and 22 will be described.

Causes of the cross currents include a case where a timing of an output voltage pulse is deviated between the power converters, and a case where an amplitude of the output voltage pulse is deviated between the power converters. The former is caused by differences in individual characteristics of conducting paths and gate circuits of gate signals that drive semiconductor switching devices. The latter is caused by a difference in DC voltage between the DC voltage sections.

Since each DC voltage is controlled by an independent converter, there is no difference in DC voltage if voltage control of each converter operates correctly. However, if there is a detection error in a voltage sensor that performs voltage detection, for example, it will affect the control, causing a difference in DC voltage and causing a cross current.

If the switching timing deviation of the semiconductor switching device (timing deviation of the gate signal) is either a delay or advance, or if there is a difference in DC voltage, the cross currents $i_{cu}$, $i_{cv}$, and $i_{cw}$ flow as three-phase balanced currents as shown in FIG. 2B.

The output currents $i_{u1}$, $i_{v1}$, and $i_{w1}$ of the inverter 21 and the output currents $i_{u2}$, $i_{v2}$, and $i_{w2}$ of the inverter 22 are detected by a current transformer (not shown), and respective detected values are fetched by the control device 10 and input to a cross current detector 4.

In the cross current detector 4, the cross currents $i_{cu}$, $i_{cv}$, and $i_{cw}$ of respective phases are calculated based on the output currents $i_{u1}$, $i_{v1}$, and $i_{w1}$ of the inverter 21 (or the output currents $i_{u2}$, $i_{v2}$, and $i_{w2}$ of the inverter 22) and the load currents $i_u$, $i_v$, and $i_w$. The cross currents are calculated by the following equations (1).

$$
\begin{aligned}
i_{cu} &= i_{u1} - (i_u/2) \\
i_{cv} &= i_{v1} - (i_v/2) \qquad \cdots (1) \\
i_{cw} &= i_{w1} - (i_w/2)
\end{aligned}
$$

Herein, the case where the calculation is performed using $i_{u1}$, $i_{v1}$, and $i_{w1}$ without using $i_{u2}$, $i_{v2}$, and $i_{w2}$ is exemplified, but a similar calculation may be performed by using $i_{u2}$, $i_{v2}$, and $i_{w2}$ instead of $i_{u1}$, $i_{v1}$, and $i_{w1}$. As for the cross current generated between the two parallel power converters as shown in FIG. 1, the same calculation result can be obtained regardless of which calculation method is adopted.

In the cross current controller 5, a voltage control amount $v_{adj}$ and a timing control amount $t_{adj}$ are calculated based on the cross currents $i_{cu}$, $i_{cv}$, and $i_{cw}$ detected by the cross current detector 4.

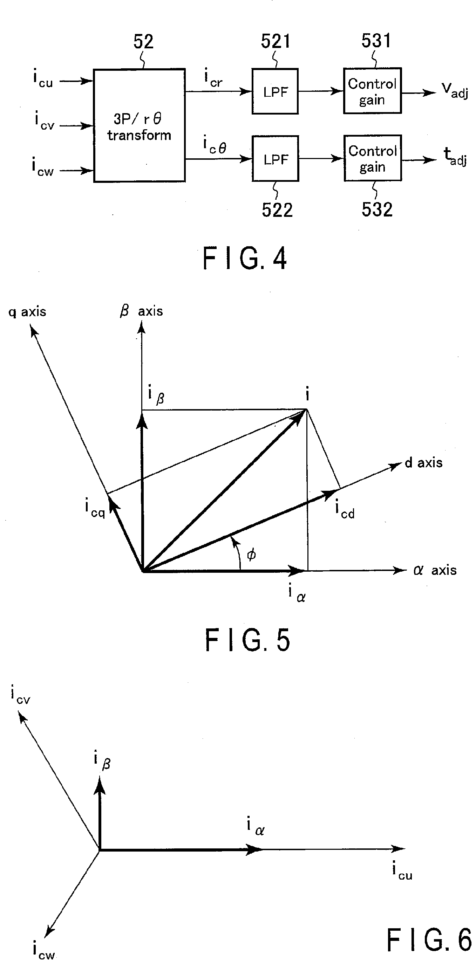

A configuration example of the cross current controller 5 is shown in FIG. 3. In addition, another configuration example of the cross current controller 5 is shown in FIG. 4.

The configuration example of FIG. 3 is an example having a function of dq transform. On the other hand, the configuration example of FIG. 4 is an example having a function of rθ transform (polar coordinate transform).

In the configuration example of FIG. 3, the cross current controller 5 includes functions of a 3P/dq transform 51, low-pass filters 521 and 522, and control gains 531 and 532.

The 3P/dq transform 51 dq converts values of the cross currents $i_{cu}$, $i_{cv}$, and $i_{cw}$ detected by the cross current detector 4 so as to obtain a d-axis current $i_{cd}$ and a q-axis current $i_{cq}$ expressing amounts of the cross currents between the inverters as DC amounts. That is, the cross currents for three phases generated between the inverters that are difficult to grasp are observed in the form of simple DC amounts. In the dq transform, values on a three-phase system are converted into values on a two-phase system (dq system). In the present embodiment, in this dq system, a cross current component corresponding to a difference in DC voltage between the power converters is assigned to the d axis, and a cross current component corresponding to a switching timing deviation between the power converters is assigned to the q axis, but the assignment is not limited to this example. It is possible to switch the assignments of the d axis and the q axis. A specific method of the dq transform will be described later.

A cross current component due to a difference in DC voltage between the power converters is reflected to the d-axis current $i_{cd}$ obtained by the dq transform, and the d-axis current $i_{cd}$ can be effectively used for control (voltage control) for suppressing the difference in DC voltage between the power converters. Similarly, a cross current component due to a switching timing deviation between the power converters is reflected to the q-axis current $i_{cq}$ obtained by the dq transform, and the q-axis current $i_{cq}$ can be effectively used for control (timing control) for suppressing the switching timing deviation between the power converters.

The low-pass filters 521 and 522 remove noise, etc. from the d-axis current $i_{cd}$ and the q-axis current $i_{cq}$, respectively, and output the currents. However, the low-pass filters 521 and 522 are not always necessary, and can be omitted.

The control gains 531 and 532 respectively output the voltage control amount $v_{adj}$ and the timing control amount $t_{adj}$ by receiving the d-axis current $i_{cd}$ and the q-axis current $i_{cq}$ and multiplying a control gain for voltage control and a control gain for timing control. To set each the control gain, proportional control or proportional-integral control may be applied.

On the other hand, in the configuration example of FIG. 4, the cross current controller 5 includes functions of a 3P/rθ transform 52, the low-pass filters 521 and 522, and the control gains 531 and 532.

The 3P/rθ transform 52 obtains an r-axis current $i_{cr}$ and a θ-axis current $i_{cθ}$ expressing cross current amounts between the inverters as DC amounts by rθ converting the values of the cross currents $i_{cu}$, $i_{cv}$, and $i_{cw}$ detected by the cross current detector 4, and performing a calculation θ - φ of subtracting a rotation phase (= φ) of an output voltage (or an output current) to be described later from θ. That is, the cross currents for three phases generated between the inverters that are difficult to grasp are observed in the form of simple DC amounts. In the rθ transform, values on a three-phase system are converted into values on a two-phase system (rθ system). In the present embodiment, in this rθ system, a cross current component corresponding to a difference in DC voltage between the power converters is assigned to the r axis, and a cross current component corresponding to a switching timing deviation between the power converters is assigned to the θ axis. A specific method of the rθ transform will be described later.

A component due to a difference in DC voltage between the power converters is reflected to the r-axis current $i_{cr}$ obtained by the rθ transform, and the r-axis current $i_{cr}$ can be effectively used for control (voltage control) for suppressing the difference in DC voltage between the power converters. Similarly, a component due to a switching timing deviation between the power converters is reflected to the θ-axis current $i_{cθ}$ obtained by the rθ transform and θ - φ calculation, and the θ-axis current $i_{cθ}$ can be effectively used for control (timing control) for suppressing the switching timing deviation between the power converters.

The low-pass filters 521 and 522 remove noise, etc. from the r-axis current $i_{cr}$ and the θ-axis current $i_{cθ}$, respectively, and output the currents. However, the low-pass filters 521 and 522 are not always necessary, and can be omitted.

The control gains 531 and 532 respectively output the voltage control amount $v_{adj}$ and the timing control amount $t_{adj}$ by receiving the r-axis current $i_{cr}$ and the θ-axis current ice and multiplying a control gain for voltage control and a control gain for timing control. To set each the control gain, proportional control or proportional-integral control may be applied.

Next, specific methods of the above-described dq transform and rθ transform will be described with reference to FIGS. 5 to 8.

FIG. 5 is a diagram showing a relationship between the dq system with the d-axis current $i_{cd}$ and the q-axis current $i_{cq}$ as two axes (d axis, q axis), and an αβ system with reference currents $i_α$ and $i_β$ as two axes (α axis, β axis). A phase difference between the d axis and the α axis is φ, and coincides with phase information (rotation phase) of an output voltage or output current (the same applies to a phase difference between the q axis and the β axis).

FIG. 6 is a diagram showing a relationship between a three-phase system with the cross currents $i_{cu}$,

$i_{cv}$, and $i_{cw}$ as three axes, and the αβsystem with the above-described currents $i_\alpha$ and $i_\beta$ as two axes. Of the three axes, an axis to which $i_{cu}$ is assigned coincides in orientation with the α axis to which $i_\alpha$ is assigned. That is, a phase difference between the d axis in FIG. 5 and the axis to which $i_{cu}$ is assigned is φ.

First, a specific example of the above-described dq transform performed in the 3P/dq transform 51 in FIG. 3 will be described.

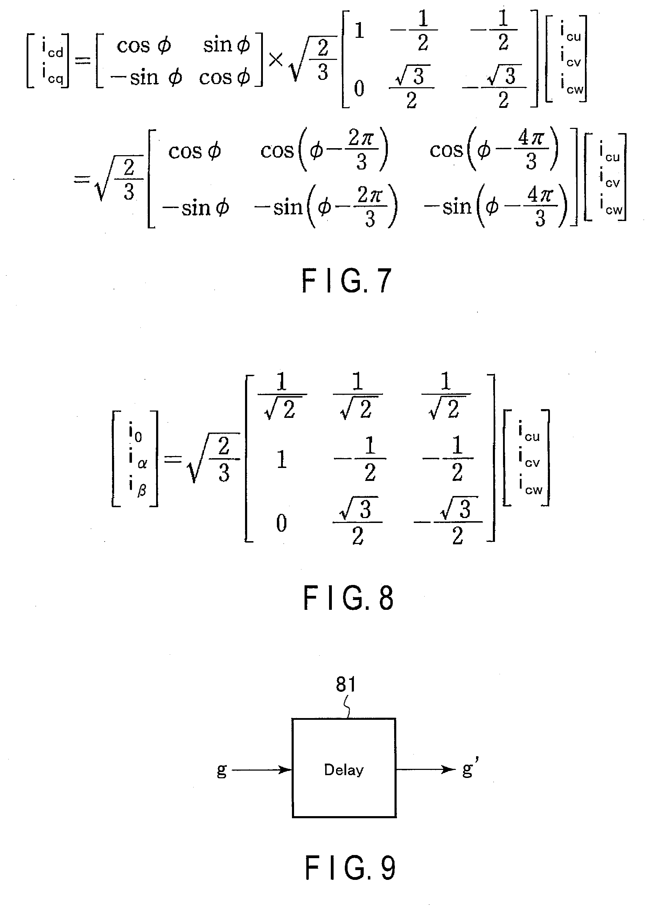

Based on a relationship between the three-phase system in FIG. 6 and the dq system in FIG. 5, the d-axis current $i_{cd}$ and the q-axis current $i_{cq}$ are obtained from the cross currents $i_{cu}$, $i_{cv}$, and $i_{cw}$ using a calculation shown in FIG. 7. The above-described $i_\alpha$ and $i_\beta$ are not used in this calculation, but will be used in a computing equation related to the rθ transform to be described later.

Next, a specific example of the above-described rθ transform performed by the 3P/rθ transform 52 in FIG. 4 will be described.

Based on the relationship between the three-phase system and the αβsystem in FIG. 6, the electric currents $i_\alpha$ and $i_\beta$ are obtained from the cross currents $i_{cu}$, $i_{cv}$, and $i_{cw}$ using a calculation shown in FIG. 8. Note that a zero-phase current $i_0$ in the calculation shown in FIG. 8 is ignored. Next, r and θ in the rθsystem are obtained from the obtained electric currents $i_\alpha$ and $i_\beta$ using the following calculation, where θ indicates a deflection angle on the rθ system.

$$R = \sqrt{(i_\alpha{}^2 + i_\beta{}^2)}$$

$$\theta = \text{atan}(i_\beta/i_\alpha)$$

As it is, θ changes with a rotation of a cross current vector. Therefore, by subtracting a rotation phase (= φ) of an output voltage (or output current) from θ, the value is converted into a DC amount.

The voltage control amount $v_{adj}$ output from the cross current controller 5 shown in FIG. 1 is input to the voltage controller 6. To this voltage controller 6, the DC voltage values $V_{dc1}$ and $V_{dc2}$ detected by a voltage sensor (not shown) are input, and a rated DC voltage value $V_{dc}{}^*$ as a corresponding reference is also input.

In the voltage controller 6, the DC voltages $V_{dc1}$ and $V_{dc2}$ are controlled based on the rated DC voltage value $V_{dc}{}^*$ and the voltage control amount $v_{adj}$. Specifically, the voltage controller 6 feedback controls the DC voltage values $V_{dc1}$ and $V_{dc2}$ so as to be "rated DC voltage value $V_{dc}{}^*$ + voltage control amount $v_{adj}$" and "rated DC voltage value $V_{dc}{}^*$ - voltage control amount $v_{adj}$", respectively, and outputs effective current references $i_{dcnv1}{}^*$ and $i_{dcnv2}{}^*$ for the converters 11 and 12, to which results of the control are reflected. The effective current references $i_{dcnv1}{}^*$ and $i_{dcnv2}{}^*$ are current components that contribute to control of the DC voltage of the DC voltage section in each power converter.

The effective current references $i_{dcnv1}{}^*$ and $i_{dcnv2}{}^*$ for the converters 11 and 12 output from the voltage controller 6 are input to a current controller 71. To this current controller 71, effective current detection values $i_{dcnv1}$ and $i_{dcnv2}$ for the converters 11 and 12 detected by a current transformer (not shown) are also input.

In the current controller 71, $i_{dcnv1}$ and $i_{dcnv2}$ are controlled based on the effective current references $i_{dcnv1}{}^*$ and $i_{dcnv2}{}^*$. Specifically, the current controller 71 feedback controls the effective current detection values $i_{dcnv1}$ and $i_{dcnv2}$ so as to be the effective current references $i_{dcnv1}{}^*$ and $i_{dcnv2}{}^*$, and outputs converter gate signals $g_{cnv1}$ and $g_{cnv2}$ to which results of the control are reflected.

The converter gate signals $g_{cnv1}$ and $g_{cnv2}$ output from the current controller 71 are transmitted to the converters 11 and 12, respectively, and the respective semiconductor switching devices are driven so that a DC voltage of the DC voltage section in each power converter is individually controlled, suppressing a difference in DC voltage between the power converters, and suppressing occurrence of the cross current.

To the current controller 72, an active component $i_{dinv}$ and a reactive component $i_{qinv}$ of a load current detected by a current transformer (not shown) are input, and an active current reference $i_d{}^*$ and a reactive current reference $i_q{}^*$ of the inverters as corresponding references are also input.

In the current controller 72, $i_{dinv}$ and $i_{qinv}$ are controlled based on the active current reference $i_d{}^*$ and the reactive current reference $i_q{}^*$. Specifically, the current controller 72 feedback controls the active component $i_{dinv}$ and the reactive component $i_{qinv}$ of the load current so as to be the active current reference $i_d{}^*$ and the reactive current reference $i_q{}^*$, and outputs an inverter gate signal $g_{inv}$ to which a result of the control is reflected.

The timing control amount $t_{adj}$ output from the cross current controller 5 is input to the pulse adjustment section 8. To this pulse adjustment section 8, the inverter gate signal $g_{inv}$ output from the current controller 72 is also input.

In the pulse adjustment section 8, the inverter gate signal ginv is adjusted in accordance with the timing control amount $t_{adj}$. Specifically, the pulse adjustment section 8 performs pulse adjustment to deviate the change timing of the inverter gate signal ginv by the timing control amount $t_{adj}$, and outputs gate signals ginvi and $g_{inv2}$ to which a result of the pulse adjustment is reflected.

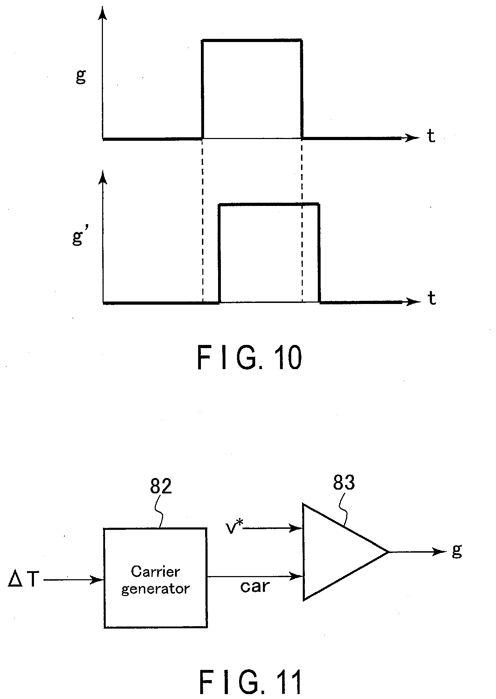

For example, a delay processing section 81 is provided as shown in FIG. 9, and a pulse of a gate signal g input to this delay processing section 81 is delayed as shown in FIG. 10 so that a gate signal g' with the delayed pulse will be output from the delay processing section 81.

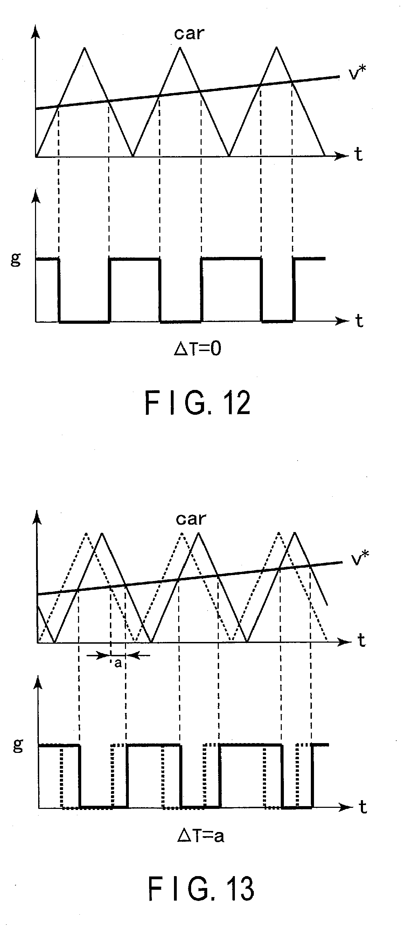

Alternatively, a carrier generation section 82 and a comparator 83 are provided as shown in FIG. 11, the carrier generation section 82 is caused to output a carrier car, a phase of which shifts according to a carrier phase shift amount ΔT input to the carrier generation section 82, so that a gate signal g with a pulse delayed according to a result of comparison between the carrier car and the reference signal v* in the comparator 83 is output from the comparator 83. For example, in a case where the carrier phase shift amount ΔT is set to 0 as shown in FIG. 12, there is no delay in the pulse of the gate signal g generated according to the magnitude relationship between the carrier car and the reference signal v*, but when the carrier phase shift amount ΔT is set to a as shown in FIG. 13, the phase of the carrier car shifts by a, so that the gate signal g with a pulse delayed by a can be output. With such a method, it is possible to advance the pulse as well as delay it.

The gate signals $g_{inv1}$ and $g_{inv2}$ output from the pulse adjustment section 8 are transmitted to the inverters 21 and 22, respectively, and the respective semiconductor switching devices are driven so that a switching timing in each power converter is controlled individually, suppressing a switching timing deviation between the power converters, and suppressing occurrence of the cross current.

The present embodiment can be appropriately modified. For example, although the case where the converters 11 and 12 each convert the three-phase AC into DC is exemplified in the present embodiment, it may not be three-phase AC. For example, the converters 11 and 12 may perform DC/DC conversion. In addition, the case where the low-pass filters are provided in the cross current controller 5 is exemplified in the present embodiment, but the low-pass filters may not be provided. In the transform processing, the correspondence between the d axis and q axis and $v_{adj}$ and $t_{adj}$ may be reversed depending on the rotation angle of the transform. Further, the cross current suppression control may be performed only for one of the d axis and the q axis, and not for both. In addition, design changes may be made as appropriate, such as applying a limiter to the control amount. Further, the rotation phase φ may be not only an output voltage phase or an output current phase of an inverter, but also a phase of a power source connected to the load side or a fixed rotation phase.

According to the present embodiment, it is possible to efficiently suppress the cross current between the power converters while suppressing the size increase and cost increase of the apparatus. In addition, according to the present embodiment, it is possible to observe the cross currents for the three phases generated between the inverters that are difficult to grasp in the form of simple DC amounts by performing transform of the detection values of the cross currents. Thus, the cross current components can be accurately grasped, and the cross currents can be effectively suppressed. Furthermore, according to the present embodiment, by the above transform, a cross current component caused by a difference in DC voltage between the power converters, and a cross current component caused by a switching timing deviation between the power converters are detected respectively, so that a cross current caused by the difference in DC voltage and a cross current caused by the switching timing deviation can be individually suppressed, thus the cross currents can be more effectively suppressed.

[Second Embodiment]

A second embodiment will be explained next. In the following, explanations of the same parts as those of the first embodiment will be omitted, and only the parts different from those of the first embodiment will be mainly explained.

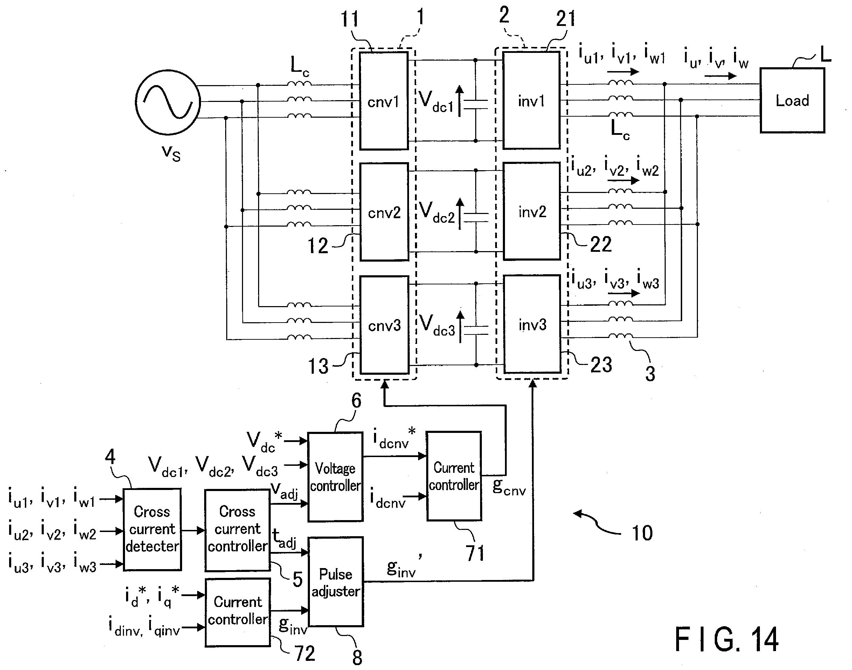

FIG. 14 is a diagram showing an example of a configuration of an electric power conversion apparatus according to the second embodiment. In FIG. 14, the elements that are the same as those of the above-described first embodiment are denoted by the same symbols as those of the first embodiment.

Although the basic configuration is the same as that of the first embodiment, the number of parallel power converters each including a converter and an inverter differs from that of the first embodiment. That is, in the second embodiment, the case where three power converters each including a converter and an inverter are in parallel is exemplified as shown in FIG. 14.

Specifically, a power converter including a converter 11 (cnv1) and an inverter 21 (inv1), a power converter including a converter 12 (cnv2) and an inverter 22 (inv2), and a power converter including a converter 13 (cnv3) and an inverter 23 (inv3) are connected in parallel. The converters 11, 12, and 13 constitute a converter section 1, and the inverters 21, 22, and 23 constitute an inverter section 2. A DC voltage section shared by the converter 11 and inverter 21, a DC voltage section shared by the converter 12 and inverter 22, and a DC voltage section shared by the converter 13 and inverter 23 are independent from each other, and are not connected to each other.

The control is also the same as that of the first embodiment in principle. However, since there are three cross current routes, i.e., between the inverters 21-22, between the inverters 22-23, and between the inverters 23-21, a method of calculating a control amount is different from that of the first embodiment.

The case where the three power converters are in parallel is exemplified in FIG. 14, but the number of parallel power converters may be three or more. In the following, a method of calculating a control amount when the number of parallel power converters is three or more will be described.

In the cross current detector 4, based on a load current $i_x$ (x = [u, v, w]) and an output current $i_{xn}$ (x = [u, v, w], and n = [1, 2, ..., m]) of each inverter, a cross current $i_{cxn}$ (x = [u, v, w], n = [1, 2, ..., m]) of each inverter is calculated. m represents the number of parallel converters and inverters. The cross current is calculated by the following equation.

$$i_{cxn} = i_{xn} - (i_x/n) \quad \dots \quad (2)$$

In the cross current controller 5, a voltage control amount $v_{adj}$ and a timing control amount $t_{adj}$ are calculated for each power converter based on the cross current $i_{cxn}$ between the individual inverters detected by the cross current detector 4.

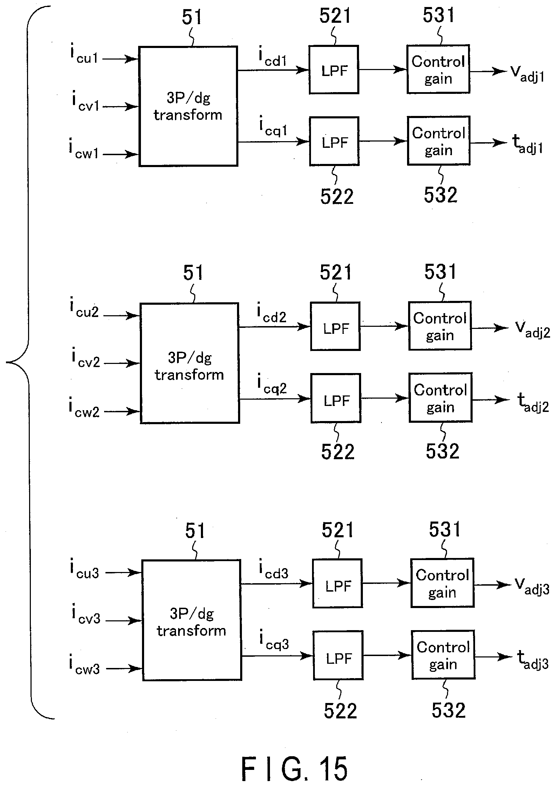

A configuration example of the cross current controller 5 is shown in FIG. 15. The configuration example of FIG. 15 is an example having a function of dq transform in a case of three parallel power converters. A function of rθ transform may be performed instead of the function of dq transform.

As shown in the configuration example of FIG. 15, the cross current controller 5 includes the same number of functions of 3P/dq transforms 51, low-pass filters 521 and 522, and control gains 531 and 532, as the number of parallel power converters.

The 3P/dq transforms 51 dq convert values of the cross currents $i_{cun}$, $i_{cvn}$, and $i_{cwn}$ detected by the cross current detector 4 for the respective power converters so as to obtain a d-axis current $i_{cdn}$ and a q-axis current $i_{cqn}$ of the respective power converters. The low-pass filters 521 and 522 and the control gains 531 and 532 are as described above.

In the voltage controller 6, the voltage is controlled for each converter. Specifically, the voltage controller 6 feedback controls a DC voltage value $V_{dcn}$ so as to be "rated DC voltage value $V_{dc}^*$ + voltage control amount $v_{adjn}$", and an effective current reference $i_{dcnv}^*$ for each converter to which a result of the control is reflected is generated.

In the current controller 71, the current is controlled for each converter, and a converter gate signal $g_{cnv}$ is generated for each converter.

The converter gate signal $g_{cnv}$ for each converter that is output from the current controller 71 is transmitted to the corresponding converter, and the respective semiconductor switching devices are driven so that a DC voltage of the DC voltage section in each power converter is individually controlled, suppressing a difference in DC voltage between the power converters, and suppressing occurrence of a cross current.

In the current controller 72, the current is controlled for each inverter, and an inverter gate signal ginv is generated for each inverter.

In the pulse adjustment section 8, pulse adjustment is performed for each inverter. Specifically, pulse adjustment to deviate a change timing of the inverter gate signal $g_{inv}$ of an inverter n by a timing control amount $t_{adjn}$ is performed, and a gate signal $g_{inv}$' is generated for each inverter.

The gate signal $g_{inv}$' of each inverter that is output from the pulse adjustment section 8 is transmitted to the corresponding inverter, and the respective semiconductor switching devices are driven so that a switching timing in each power converter is individually controlled, suppressing a switching timing deviation between the power converters, and suppressing occurrence of a cross current.

According to the present embodiment, even when the number of parallel power converters is three or more, it is possible to efficiently suppress the cross current between the power converters while suppressing the size increase and cost increase of the apparatus, and the same effect as that described in the first embodiment can be obtained.

As described above, according to the embodiments, the cross current between the power converters can be suppressed while suppressing the size increase and cost increase of the apparatus.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made. The accompanying claims and their equivalents are intended to cover such forms or modifications as would fall within the scope of the inventions.

**Claims**

1. An electric power conversion apparatus provided with a plurality of converters and inverters (11, 21, 12, 22; 11, 21, 12, 22, 13, 23) that share direct current voltage sections, each of the direct current voltage sections independent of other direct current voltage sections, and output sides of the inverters (21, 22; 21, 22, 23) connected to each other, the apparatus comprising:
a control device (10) configured to obtain a cross current amount between the inverters by performing predetermined axis-conversion on a detection value of a cross current between the inverters, and control an output voltage or an output current of the individual converters (11, 12; 11, 12, 13) or the individual inverters (21, 22; 21, 22, 23) based on the cross current amount.

2. The electric power conversion apparatus according to claim 1, wherein the control device (10) is configured to obtain a direct current voltage control amount from a part of the cross current amount obtained by the axis-conversion, and control a direct current voltage of the individual direct current voltage sections by the direct current voltage control amount.

3. The electric power conversion apparatus according to claim 2, wherein the control device (10) is configured to apply the direct current voltage control amount to the individual converters (11, 12; 11, 12, 13) to control the direct current voltage of the individual direct current voltage sections.

4. The electric power conversion apparatus according to any one of claims 1 to 3, wherein the control device (10) is configured to obtain a time control amount from a part of the cross current amount obtained by the axis-conversion, and control a switching timing of the individual inverters (21, 22; 21, 22, 23) by the time control amount.

5. The electric power conversion apparatus according to claim 4, wherein the control device (10) is configured to control the switching timing by shifting a carrier phase in any of the inverters based on the time control amount.

6. The electric power conversion apparatus according to any one of claims 1 to 5, wherein the control device (10) is configured to set a control amount to be applied to the individual inverters (21, 22; 21, 22, 23) according to a cross current component included in a current output by the individual inverters (21, 22; 21, 22, 23).

7. The electric power conversion apparatus according to any one of claims 1 to 6, wherein the detection value of the cross current between the inverters corresponds to the cross current component included in the current output by the individual inverters (21, 22; 21, 22, 23).

8. The electric power conversion apparatus according to any one of claims 1 to 7, wherein the axis-conversion is dq transform.

9. The electric power conversion apparatus according to any one of claims 1 to 7, wherein the axis-conversion is $r\theta$ transform that is polar coordinate transform, which is used to control a direct current voltage on an r axis, and control a switching timing by an amount obtained by subtracting a rotation phase of an output voltage or an output current from a $\theta$ axis.

10. A method for controlling an electric power conversion apparatus provided with a plurality of converters and inverters (11, 21, 12, 22; 11, 21, 12, 22, 13, 23) that share direct current voltage sections, each of the direct current voltage sections independent of other direct current voltage sections, and output sides of the inverters (21, 22; 21, 22, 23) connected to each other, the method comprising:
obtaining, by a control device (10), a cross current amount between the inverters by performing predetermined axis-conversion on a detection value of a cross current between the inverters, and controlling an output voltage or an output current of the individual converters (11, 12; 11, 12, 13) or the individual inverters (21, 22; 21, 22, 23) based on the cross current amount.

FIG. 1

EP 3 800 774 A1

(a)

FIG. 2A

FIG. 2B

(b)

FIG. 3

FIG. 4

FIG. 5

FIG. 6

$$\begin{bmatrix} i_{cd} \\ i_{cq} \end{bmatrix} = \begin{bmatrix} \cos\phi & \sin\phi \\ -\sin\phi & \cos\phi \end{bmatrix} \times \sqrt{\frac{2}{3}} \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} i_{cu} \\ i_{cv} \\ i_{cw} \end{bmatrix}$$

$$= \sqrt{\frac{2}{3}} \begin{bmatrix} \cos\phi & \cos\left(\phi-\frac{2\pi}{3}\right) & \cos\left(\phi-\frac{4\pi}{3}\right) \\ -\sin\phi & -\sin\left(\phi-\frac{2\pi}{3}\right) & -\sin\left(\phi-\frac{4\pi}{3}\right) \end{bmatrix} \begin{bmatrix} i_{cu} \\ i_{cv} \\ i_{cw} \end{bmatrix}$$

## F I G. 7

$$\begin{bmatrix} i_0 \\ i_\alpha \\ i_\beta \end{bmatrix} = \sqrt{\frac{2}{3}} \begin{bmatrix} \frac{1}{\sqrt{2}} & \frac{1}{\sqrt{2}} & \frac{1}{\sqrt{2}} \\ 1 & -\frac{1}{2} & -\frac{1}{2} \\ 0 & \frac{\sqrt{3}}{2} & -\frac{\sqrt{3}}{2} \end{bmatrix} \begin{bmatrix} i_{cu} \\ i_{cv} \\ i_{cw} \end{bmatrix}$$

## F I G. 8

81

g ⟶ [ Delay ] ⟶ g′

## F I G. 9

F I G. 10

F I G. 11

car

v*

t

g

t

ΔT=0

FIG. 12

car

v*

t

a

g

t

ΔT=a

FIG. 13

F I G. 14

F I G. 15

Europäisches
Patentamt

European
Patent Office

Office européen
des brevets

# EUROPEAN SEARCH REPORT

Application Number

EP 20 19 7198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/279222 A1 (CAI LI [CN] ET AL) 24 October 2013 (2013-10-24) | 1,10 | INV. H02M5/458 |
| Y | * paragraph [0046] - paragraph [0053] * <br> * paragraph [0059] * <br> * paragraph [0070] - paragraph [0072] * | 2-9 | H02M7/23 <br> H02M7/493 <br> H02M7/5387 <br> H02M7/48 |
| X | US 2009/003020 A1 (ZHANG RICHARD S [US] ET AL) 1 January 2009 (2009-01-01) | 1,10 | |
| Y | * paragraph [0047] - paragraph [0055]; figures 10-15 * | 2-9 | |
| X | WO 2019/097605 A1 (TOSHIBA MITSUBISHI ELECTRIC IND SYSTEMS) 23 May 2019 (2019-05-23) | 1,10 | |
| Y | * abstract * <br> & US 2020/321888 A1 (TOBAYASHI SHUNSUKE [JP] ET AL) 8 October 2020 (2020-10-08) <br> * paragraph [0015] - paragraph [0022]; figures 1-5 * <br> * paragraph [0028] - paragraph [0032] * | 2-9 | |
| Y | US 5 253 155 A (YAMAMOTO YASUHIRO [JP]) 12 October 1993 (1993-10-12) <br> * abstract; figure 8 * | 4-7,9 | TECHNICAL FIELDS SEARCHED (IPC) <br><br> H02M |

The present search report has been drawn up for all claims

| Place of search | Date of completion of the search | Examiner |
|---|---|---|
| The Hague | 1 February 2021 | Gusia, Sorin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 19 7198

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2021

| Patent document cited in search report | | Publication date | Patent family member(s) | | | Publication date |
|---|---|---|---|---|---|---|
| US 2013279222 | A1 | 24-10-2013 | CN | 103378742 | A | 30-10-2013 |
| | | | US | 2013279222 | A1 | 24-10-2013 |
| US 2009003020 | A1 | 01-01-2009 | CN | 101335491 | A | 31-12-2008 |
| | | | EP | 2009779 | A2 | 31-12-2008 |
| | | | US | 2009003020 | A1 | 01-01-2009 |
| WO 2019097605 | A1 | 23-05-2019 | CN | 111357186 | A | 30-06-2020 |
| | | | EP | 3713075 | A1 | 23-09-2020 |
| | | | JP | WO2019097605 | A1 | 22-10-2020 |
| | | | US | 2020321888 | A1 | 08-10-2020 |
| | | | WO | 2019097605 | A1 | 23-05-2019 |
| US 5253155 | A | 12-10-1993 | DE | 69212928 | T2 | 09-01-1997 |
| | | | EP | 0524398 | A2 | 27-01-1993 |
| | | | JP | 3185257 | B2 | 09-07-2001 |
| | | | JP | H0530661 | A | 05-02-1993 |
| | | | KR | 930003511 | A | 24-02-1993 |
| | | | US | 5253155 | A | 12-10-1993 |

EPO FORM P0459

For more details about this annex : see Official Journal of the European Patent Office, No. 12/82